# FASCICULE DE BREVET EUROPEEN

(11) **EP 1 441 590 B1**
(45) Date de publication et mention de la délivrance du brevet: **07.05.2008**
(21) Numéro de dépôt: 02793216.9
(22) Date de dépôt: 08.11.2002
(51) Int. Cl.: A01N 43/54

(54) **COMPOSITION FONGICIDE COMPRENANT DU PYRIMETHANIL ET AU MOINS UN DERIVE DE L'ACIDE PHOSPHOREUX ET SON UTILISATION POUR LA LUTTE CONTRE LES MALADIE DES PLANTES**
FUNGIZIDE ZUSAMMENSETZUNG ENTHALTEND PYRIMETHANIL UND WENIGSTENS EIN PHOSPHORSÄURE-DERIVAT UND DEREN VERWENDUNG ZUR BEKÄMPFUNG VON PFLANZENKRANKHEITEN
FUNGICIDE COMPOSITION COMPRISING PYRIMETHANIL AND AT LEAST A PHOSPHOROUS ACID DERIVATIVE AND USE THEREOF FOR FIGHTING AGAINST PLANT DISEASES

(30) Priorité: 08.11.2001 FR 0114439
(43) Date de publication de la demande: 04.08.2004
(73) Titulaire: Bayer CropScience S.A., 69009 Lyon (FR)
(72) Inventeur: DUVERT, Patrice, F-69004 Lyon (FR)
(74) Mandataire: Monconduit, Hervé
(86) Numéro de dépôt international: PCT/FR2002/003832
(87) Numéro de publication internationale: WO 2003/039257

(56) Documents cités:
- CENTRAL PATENTS INDEX, BASIC ABSTRACTS JOURNAL Derwent Publications Ltd., London, GB; AN 93-185134 XP002201203 KUMIAI CHEM IND: "Agricultural antimicrobial compsns. for treating powdery mildew etc. - contain 2-anilino-4-methyl-pyrimidine deriv. and e.g. 2,6-dichloro-4-nitro-aniline" & JP 05 112408 A 7 mai 1993 (1993-05-07)

## Description

La présente invention concerne une composition fongicide comprenant du pyrimethanil et au moins un dérivé du phosphore et plus spécialement de l'acide phosphoreux, ainsi que l'utilisation d'une telle composition associant ces composés actifs pour la lutte contre les maladies des plantes ou contre les champignons phytopathogènes présents ou susceptibles d'apparaître sur les plantes, une telle association permettant en particulier une prolongation dans le temps de l'activité du pyrimethanil.

Le pyrimethanil est un composé fongicide largement connu et notamment décrit dans l'ouvrage intitulé The Electronic Pesticide Manual (Twelfth Edition) version 2.0 (du British Crop Protection Council, édité par Clive Tomlin).

Par ailleurs, la demande de brevet français n°2 692 108 qui concerne essentiellement des mélanges à base de pyrimethanil et de nombreux autres composés, donne une liste de plus de onze types de familles de composés fongicides et de plus de 70 composés candidats au mélange, parmi cette liste systématique de composés, seuls 23 mélanges ont donné lieu à expérimentation en laboratoire, aucun en condition de plein champ. Le mélange pyrimethanil et dérivé(s) du phosphore (et notamment de l'acide phosphoreux) n'est nullement évoqué, ni même suggéré par ce document. Un tel mélange n'a jamais été réalisé et encore moins expérimenté.

Parmi les dérivés du phosphore connus comme fongicides, figurent les dérivés d'acide phosphoreux ou phosphonique tels que l'acide phosphoreux et ses sels alcalins ou alcalino-terreux, les phosphites métalliques (Al, Na) dont notamment le fosetyl-Al. Ce fongicide est largement connu et commercialisé, notamment sous le nom d'Aliette®. Le fosetyl-Al est le monoéthylester-phosphonate d'aluminium, décrit en particulier dans les brevets suivants : DE-B-2 456 627, US-B-4 139 616, et US-B-4 143 059, ainsi que dans "The Pesticide Manual", a World Compendium, 11" édition, C. D. S. Tomlin, British Crop Protection Council, n° 599.

Par ailleurs la demande de brevet japonais n°05112408 décrit des associations de composés fongicides choisis parmi deux groupes. Le premier groupe comprend des dérivés de type 2-anilino-4-methylpyrimidine dont 7 sont donnés en exemple tandis que le second groupe concerne cinq autres composés fongicides connus qui sont la 2,6-dichloro-4-nitroaniline, l'iprodione, la procymidone, le fosetyl-Al et la polyoxin. Néanmoins, la combinaison spécifique du pyrimethanil et d'un dérivé de l'acide phosphoreux n'est pas décrite dans ce document dont l'objet est de fournir un moyen de lutte anti-fongique qui soit à spectre large ou à effet synergique.

La prolongation dans le temps de l'efficacité du pyrimethanil au sein de l'association de la présente invention n'est aucunement divulguée ni suggérée dans aucun de ces documents.

En matière d'activité fongicide, notamment pour la protection des cultures, l'un des problèmes au coeur des recherches menées dans ce domaine technique est l'amélioration des performances, en particulier en terme d'activité fongicide et surtout en terme de maintien de cette activité fongicide dans le temps.

Naturellement, les fongicides utiles dans la protection des végétaux contre les champignons doivent être dotés d'une écotoxicité réduite au minimum, sachant que les utilisateurs de matières actives fongicides, de même que les consommateurs des produits issus de ces cultures, sont de plus en plus sensibilisés.

En outre, d'un point de vue toxicologique, les fongicides doivent être autant que faire se peut, ni dangereux, ni toxiques lors de leur utilisation.

De plus, il est avantageux que les fongicides aient un large spectre d'activité.

Le facteur économique ne doit bien entendu pas être négligé dans la recherche de nouveaux fongicides.

Le corollaire de tout cela est qu'il est toujours souhaitable de réduire les doses de produits chimiques épandus dans l'environnement pour lutter contre les attaques fongiques des cultures, notamment en réduisant les doses d'application des produits et/ou la fréquence d'application.

Sans que cela ne soit limitatif, on s'intéresse plus particulièrement dans le cadre de l'invention, à la protection des cultures contre l'infestation par des champignons, tels que la pourriture grise, les altemarioses, les tavelures, les monilioses ou encore les cercosporioses, les cultures plus spécialement concernées étant les cultures fruitières ou légumières incluant la vigne, l'arboriculture, la banane, les légumes variés.

Un autre avantage de la présente invention est de permettre une meilleure gestion des phénomènes de résistance des organismes phytopathogènes des cultures à l'encontre des matières actives anti-fongiques connues.

Une autre difficulté relative à l'utilisation de nombreuses matières fongicides réside dans l'accumulation de plusieurs des problèmes qui viennent d'être exposés. II est, en effet, encore plus difficile de résoudre les problèmes posés lorsqu'ils se cumulent car les solutions envisageables sont parfois antinomiques voire antagonistes.

Un but de l'invention est donc de fournir une nouvelle composition fongicide, utile pour résoudre les problèmes exposés ci-dessus, en particulier une composition qui permet d'améliorer la persistance d'action du pyrimethanil.

Un autre but de l'invention est de proposer une nouvelle composition fongicide utile dans le traitement préventif et curatif des maladies fongiques, par exemple des cultures fruitières ou légumières incluant la vigne, l'arboriculture, la banane, les cultures de légumes variés.

Un autre but de la présente invention est de fournir une composition fongicide possédant des propriétés préventives, curatives, éradicantes et anti-sporulantes.

Un autre but de la présente invention est de permettre l'utilisation des dérivés de l'acide phosphoreux, tel le fosetyl-Al, et de l'acide phosphoreux lui-même contre les maladies qui touchent les cultures arboricoles et notamment la tavelure.

Un autre but de cette invention est de permettre un espacement des traitements appliqués sur les cultures voir de permettre la suppression d'un certain nombre de ces traitements.

D'autres buts de l'invention apparaîtront dans l'exposé de l'invention qui suit.

De façon surprenante, il a été découvert que l'ensemble de ces buts, parmi d'autres, peuvent être atteints en totalité ou partie grâce aux compositions fongicides objet de la présente invention, associant comme actifs du pyrimethanil et au moins un dérivé du phosphore, avantageusement au moins un dérivé de l'acide phosphoreux.

La persistance des effets fongicides que permet d'atteindre l'invention, a pour effet bénéfique la réduction des doses et du nombre d'applications requis.

De préférence, le dérivé du phosphore est un dérivé de l'acide phosphoreux, de préférence choisi dans le groupe comprenant les dérivés de l'acide phosphoreux comme les phosphites métalliques tels que le fosetyl-Al, le fosetyl-Na, l'acide phosphoreux et ses sels alcalins ou alcalino-terreux, et leurs mélanges ; le fosetyl-Al et le fosetyl-Na étant plus particulièrement préférés ainsi que l'acide phosphoreux lui-même. Ces combinaisons particulières se sont montrées très avantageuses pour des rapports pyrimethanil-autre composé allant de 0,1 à 1.

On trouvera dans l'ouvrage cité plus haut des références à des méthodes de préparation de tels composés.

Au sein de la composition selon l'invention, le rapport des quantités de pyrimethanil et de dérivé de l'acide phosphoreux va de 0,0005 à 250, de préférence de 0,05 à 10, et plus préférentiellement encore de 0,05 à 1.

Toutefois, des rapports de ces composés allant de 0,1 à 10, de préférence de 0,1 à 6, encore plus préférentiellement de 0,1 à 1, se sont montrés encore plus avantageux.

Une composition selon l'invention particulièrement avantageuse comprend du pyrimethanil et du fosetyl-Al en un rapport allant de 0,1 à 10, de préférence de 0,1 à 6, encore plus préférentiellement de 0,1 à 1.

De manière habituelle, les compositions selon l'invention comprennent entre 0,00001 et 100%, de préférence entre 0,001 et 80%, de composés actifs, que ces composés soient associés, ou qu'ils soient sous la forme de deux matières actives utilisées séparément.

Sauf précision contraire, les proportions et pourcentages employés ou décrits, tant tout au long du présent exposé, que dans les revendications qui suivront, sont des proportions ou pourcentages en poids.

Pour leur emploi dans la pratique, les substances actives de la composition selon l'invention sont rarement utilisées seules.

Ainsi, pour leur mise en oeuvre, ces matières actives sont habituellement associées à un support, solide ou liquide, utilisable notamment dans le domaine de l'agriculture, et éventuellement au moins un agent tensioactif et/ou un ou plusieurs agents auxiliaires.

En particulier, sont utilisables comme supports, les supports inertes et usuels ; de même que, comme agents tensioactifs, sont utilisables les agents tensioactifs usuels dans le domaine de la mise en formulation de compositions destinés à des usages en agriculture, notamment pour le traitement ou la protection des cultures tels que ceux de la présente invention.

Selon un autre mode de réalisation de la présente invention, les différentes compositions fongicides selon l'invention qui ont pu être décrites jusque là, peuvent également prendre la forme de mélanges extemporanés communément qualifiés de tank-mix.

Ces compositions fongicides sous forme de tank-mix sont habituellement sous forme de compositions fongicides diluées.

Le plus souvent, ces compositions fongicides dites tank-mix sont mélangées dans le réservoir du dispositif d'application.

De manière habituelle, les composés fongicides mis en oeuvre dans les compositions selon l'invention sont donc associés à un ou plusieurs supports et/ou à une ou plusieurs substances utiles à leur mise en formulation. Ainsi, le cas échéant, les compositions selon l'invention peuvent comprendre jusqu'à 99% de support et/ou jusqu'à 25% d'un ou plusieurs agents tensio-actifs et/ou jusqu'à 25% d'un ou plusieurs agents de formulation.

Dans le présent exposé, par le terme support, on désigne une matière organique ou minérale, naturelle ou synthétique, avec laquelle la ou les matières actives sont dans les compositions selon l'invention, notamment pour faciliter leur application sur une plante, un fruit ou encore sur des graines ou sur le sol.

Ce support est donc généralement inerte et il doit, le plus souvent, être acceptable en agriculture, notamment par la plante traitée ou par les fruits de cette plante au sens large.

Comme exemples de supports solides utilisables, on peut mentionner les silicates naturels ou synthétiques, les résines, les cires, les poudres fines ou les granules d'argile, notamment d'argile kaolinique, de terre de diatomées, de bentonite ou d'argile acide, l'oxyde de silicium hydraté synthétique, les talcs, les céramiques, d'autres minéraux dont la séricite, le quartz, le soufre, le charbon actif, le carbonate de calcium, la silice hydratée, ou encore les engrais industriels comme le sulfate d'ammonium, le phosphate d'ammonium, le nitrate d'ammonium, l'urée ou le chlorure d'ammonium, silicates naturels ou synthétiques, résines, cires, talc, chaux, quartz, attapulgite, montmorillonite, bentonite ou terres à diatomées, alumine, ou silicates, roches naturelles, pilées ou concassées, telles que calcite, marbre, pierre ponce, sépiolite, et dolomite ; granulés synthétiques de farines inorganiques ou organiques ; granulés de matériau organique tel que sciure, écorce de noix de coco, épi ou enveloppe de maïs ou tige de tabac ; kieselguhr, phosphate tricalcique, liège en poudre, ou noir de carbone adsorbant ; polymères solubles dans l'eau.

Comme exemples de supports liquides utilisables, on peut mentionner l'eau, les alcools et notamment le méthanol ou l'éthanol, les cétones et notamment l'acétone, la méthyléthylcétone ou la cyclohéxanone, les fractions de pétrole, les hydrocarbures aromatiques dont le benzène, le toluène, le xylène, l'éthylbenzène ou le méthylnaphtalène, les hydrocarbures non aromatiques dont l'hexane, le cyclohexane, le kérosène ou le gazole, le gaz liquéfié, les esters dont l'acétate d'éthyle et l'acétate de butyle, les nitriles dont l'acétonitrile et l'isobutyronitrile, les éthers dont l'éther diisopropylique ou le dioxanne, les amides dont le N,N-diméthylformamide ou le N,N-diméthylacétamide, les hydrocarbures halogénées dont le dichlorométhane, le trichloroéthane ou le tétrachlorure de carbone, le diméthylsulfoxyde, les huiles végétales dont l'huile de soja ou l'huile de coton.

Le ou les agents tensioactifs peuvent être des agents émulsionnants, dispersants ou mouillants de type ionique ou non ionique.

On peut, par exemple, citer des sels d'acides polyacryliques, des sels d'acides lignosulfoniques, des sels d'acides phénolsulfoniques ou naphtalènesulfoniques, des polycondensats d'oxyde d'éthylène sur des alcools gras ou sur des acides gras ou sur des amines grasses, des phénols substitués, notamment des alkylphénols ou des arylphénols, des sels d'esters d'acides sulfosucciniques, des dérivés de la taurine, notamment des alkyltaurates, des esters phosphoriques d'alcools ou de phénols polyoxyéthylés ; on peut tout particulièrement citer les sels d'alkylsulfonates, les alkylarylsulfonates, les éthers alkylaryliques, leurs dérivés polyoxyéthyléniques, les polyéthylèneglycoléthers, les esters de polyalcools, les dérivés de sucres, alcools et autres.

La présence d'au moins un agent tensioactif est généralement indispensable lorsque au moins une des matières actives et/ou le support inerte ne sont pas solubles, notamment dans l'eau, dans le cas où l'agent vecteur de l'application est l'eau.

Dans les compositions selon l'invention, peuvent également être associés aux composés actifs toutes sortes d'autres ingrédients ou agents tels que, par exemple, des colloïdes protecteurs, des adhésifs, des agents épaississants, des agents thixotropes, des agents de pénétration, des colorants tels que des pigments inorganiques, des conservateurs, des arômes, des antigels, des agents stabilisants dont le phosphate acide d'isopropyle, le 2,6-di-tert-butyl-4-méthylphénol, le 2-tert-butyl-4-méthoxyphénol et le 3-tert-butyl-4-méthoxyphénol, des huiles végétales ou minérales, des acides gras ou leurs esters, des agents séquestrants, des agents dispersants dont la caséine, la gélatine, des saccharides et notamment la poudre d'amidon, la gomme arabique, certains dérivés de la cellulose ou l'acide alginique, des dérivés de la lignine, la bentonite, des polymères synthétiques solubles dans l'eau, notamment l'alcool polyvinylique, la polyvinylpyrrolidone, les acides polyacryliques, ainsi que d'autres matières actives connues pour leurs propriétés pesticides, notamment insecticides ou fongicides ; ou pour leurs propriétés favorisant la croissance des plantes, notamment des engrais ; ou pour leurs propriétés régulatrices de la croissance des plantes ou des insectes.

Par ailleurs, les compositions fongicides selon l'invention peuvent prendre des formes assez diverses, notamment être sous formes solides ou liquides. Ainsi, les compositions selon l'invention peuvent prendre de nombreuses formes de formulations ; ainsi on peut employer ces compositions comprenant les composés actifs sous forme de générateur d'aérosol ; suspension de capsules ; produit pour nébulisation a froid ; poudre pour poudrage ; concentré émulsionnable ; émulsion de type aqueux/aqueuse ; émulsion de type huileux/inverse ; granulé encapsulé ; granulé fin ; suspension concentrée pour traitement de semences ; granulé ; produit pour nébulisation a chaud ; macrogranulé ; microgranulé ; poudre à disperser dans l'huile ; suspension concentrée diluable dans l'huile ; liquide miscible dans l'huile ; pâte ; bâtonnet à usage agropharmaceutique ; poudre pour traitement de semences à sec ; semences traitées ou enrobées ; bougie fumigène ; cartouche fumigène ; fumigène ; granulé fumigène ; bâtonnet fumigène ; comprimé fumigène ; boîte fumigène ; concentré soluble ; poudre soluble ; liquide pour traitement de semences ; suspension concentrée (= concentré fluidifiable) ; liquide pour application à très bas volume ; suspension pour application à très bas volume ; produit diffuseur de vapeur ; granulés ou comprimés à disperser dans l'eau ; poudre mouillable pour traitement humide ; granulés ou comprimés solubles dans l'eau ; poudre soluble pour traitement de semences ; poudre mouillable; de même que d'éventuels mélanges, associations ou combinaisons de ces différentes formes.

Outre le pyrimethanil et au moins un dérivé du phosphore ou de l'acide phosphoreux tel que le fosetyl-AI, la composition selon l'invention peut également comprendre d'autres composés actifs et notamment un ou plusieurs composés actifs utiles pour la protection des plantes contre les nuisibles.

Parmi de tels composés actifs, la composition selon l'invention peut donc comprendre un ou plusieurs composés insecticides, herbicides, fongicides ou régulateurs de croissance.

Parmi les matières actives fongicides supplémentaires qui peuvent être employées seules ou en association avec d'autres matières actives, notamment pesticides, dans la composition selon l'invention, on peut citer le sulfate de 8-hydroxyquinoline; l'AC 382042 ; l'A*mpelomyces quisqualis* ; l'azaconazole ; l'azoxystrobin ; le *bacillus subtilis* ; le benalaxyl ; le bitertanol ; la blasticidin-S ; le bouillie bordelaise ; le bromuconazole ; le bupirimate ; la carboxin ; le polysulfure de calcium ; le captan ; le carbendazim; le carpropamid (KTU 3616); le CGA 279202 ; le chinomethionat; le chlorothalonil ; le chlozolinate ; l'hydroxide de cuivre ; le naphthenate de cuivre ; l'oxychlorure de cuivre ; le sulfate de cuivre ; l'oxide cuivreux ; le cymoxanil ; le cyproconazole ; le dichlofluanid ; le diclocymet ; le dicloran ; le diethofencarb ; le difenoconazole ; le difenzoquat ; le difenzoquat metilsulfate ; le diflumetorim ; le dimethirimol ; le dimethomorph ; le diniconazole ; le diniconazole-m ; le dinocap ; la diphnenylamine ; le dithianon ; le dodemorph ; le dodemorph acetate ; la dodine ; la dodine base libre ; l'edifenphos ; l'epoxiconazole ; l'ethasulfocarb ; l'ethirimol ; l'etridiazole ; la famoxadone ; la fenamidone ; le fenarimol ; le fenbuconazole ; le fenfuram ; le fenhexamid ; le fenpiclonil ; le fenpropidin ; le fenpropimorph ; le fentin acetate ; le fentin hydroxide ; le ferimzone ; le fluazinam ; le fludioxonil ; le fluoroimide ; la fluoxastrobin ; le fluquinconazole ; le flusilazole ; le flusulfamide ; le flutolanil ; le flutriafol ; le folpet ; le formaldehyde ; le fuberidazole ; le furalaxyl ; le gliocladium virens ; la guazatine ; le guazatine acetates ; le GY-81 ; l'hexachlorobenzene ; l'hexaconazole ; l'hymexazol ; l'IKF-916 ; l'imazalil ; l'imazalil sulfate ; l'imibenconazole ; l'iminoctadine; l'iminoctadine triacetate ; l'iminoctadine tris[albesilate] ; l'ipconazole ; l'iprobenfos ; l'iprodione ; l'iprovalicarb ; le kasugamycin ; le kasugamycin hydrochlorure hydrate ; le kresoxim-methyl ; le mancopper; le mancozeb ; le maneb ; le mepronil ; le metalaxyl ; le metalaxyl-M ; le metam-sodium ; le metconazole ; le methasulfocarb ; l'isothiocyanate de methyle ; le metiram ; le metominostrobin ; la metrafenone ; le MON-65500 ; l'acide naphthenique ; le natamycin ; le nicobifen ; le nitrothal-isopropyl ; le nuarimol ; l'octhilinone ; l'ofurace ; l'acide oléique (les acides gras) ; l'oxadixyl ; l'oxine-copper ; l'oxycarboxin ; le penconazole; le pencycuron; le pentachlorophenol ; le laurate de pentachlorophenyle ; le perfurazoate ; le phlebiopsis gigantea ; le phthalide ; le piperalin ; la polyoxin B ; les autres polyoxines ; le polyoxorim ; l'hydroxyquinoline sulfate de potassium ; le probenazole ; le prochloraz ; la procymidone ; le propamocarb ; le propamocarb hydrochloride ; le propiconazole ; le propineb ; le prothioconazole ; la pyraclostobin ; le pyrazophos ; le pyributicarb ; le pyrifenox ; le pyroquilon ; le quinoxyfen ; le quintozene ; la sec-butylamine; le 2-phenylphenoxide de sodium ; le pentachlorophenoxide de sodium ; la spiroxamine; le *streptomyces griseoviridis* ; le soufre ; le tebuconazole ; le tetraconazole ; le thiabendazole ; le thifluzamide ; le thiophanate-methyl ; le thiram ; le tolclofos-methyl ; le tolylfluanid ; le triadimefon ; le triadimenol ; le triazoxide ; le *Trichoderma harzianum* ; le tricyclazole; le tridemorph ; le triflumizole ; le triforine ; le triticonazole ; la validamycin ; le vinclozolin ; le naphthenate de zinc ; le zineb; le ziram; le zoxamide; les composés de nom chimique (E,E)-2-(2-(1-(1-(2-pyridyl)propyloxyimino)-1-cyclopropylméthyloxyméthyl)-phényl)-3-méthoxy-propénoate de et le 3-(3,5-dichlorophenyl) 4-chloro pyrazol, 1 H-Pyrazole-4-carboxamide, 1-methyl-N-[3-(4-methylphenyl)-2-thienyl]-3-(trifluor) dont le code de développement est MTF-753.

Selon un autre aspect tout aussi avantageux, la présente invention concerne également une méthode de lutte à titre curatif ou préventif contre les organismes phytopathogènes des plantes, une telle méthode selon l'invention se fonde sur l'utilisation d'au moins une composition ou d'au moins une asociation selon l'invention.

Cette méthode est particulièrement avantageuse en ce qu'elle comprend une utilisation inédite d'un dérivé du phosphore afin d'améliorer significativement la persistance d'action du pyrimethanil.

Une telle utilisation n'a jamais été décrite jusque là.

Dans le cadre de cette nouvelle utilisation, on préfère employer l'acide phosphoreux ou l'un de ses dérivés tels que décrits *supra.* Le dérivé préféré de l'acide phosphoreux est le fosetyl-Al.

Lors de leur utilisation selon la présente invention, les composés actifs mis en oeuvre le sont en des rapports pyrimethanil/dérivé du phosphore tels que ceux décrits plus haut pour la composition selon l'invention.

Parmi les procédés ou méthodes de traitement et/ou de protection selon l'invention, sont préférés ceux qui sont mis en oeuvre pour le traitement et/ou la protection des cultures, et parmi de telles méthodes ou procédés, sont tout particulièrement préférés ceux pour la protection des cultures.

Ladite mise en oeuvre des procédés selon l'invention peut être réalisée selon différentes formes et notamment en utilisant une assez grande variété de modes d'application, mais également selon différentes techniques d'application, ou bien pour la protection de différents types, variétés ou familles de végétaux ou de plantes, ou encore pour la lutte ou le contrôle de différents types d'organismes phytopathogènes.

Pour ce qui concerne les différents modes d'application utilement mis en oeuvre au cours des procédés selon l'invention, sont notamment possibles des modes d'application simultanée, séparée, alternée ou séquencée.

Néanmoins, le plus souvent, les modes d'application utiles au cours des procédés selon l'invention et qui sont préférés, consistent en des modes d'application des composés actifs de manière simultanée.

Toutefois, une variante relativement avantageuse de procédé selon l'invention, met en oeuvre un mode d'application alterné des composés actifs.

Un autre mode d'application utile pour la mise en oeuvre des procédés selon l'invention concerne l'application séquencée des composés fongicides ; un tel mode d'application séquencé peut notamment prendre la forme de plusieurs applications de pyrimethanil, puis de plusieurs applications de dérivé(s) d'acide phosphoreux.

Bien évidemment, un mode d'application séquencé inversé consistant en plusieurs applications de dérivé(s) d'acide phosphoreux, puis de plusieurs applications de pyrimethanil fait également partie des procédés de la présente invention.

Les différentes variantes de mise en oeuvre des procédés selon l'invention qui viennent d'être décrites peuvent également être combinées ou associées, entièrement ou partiellement, les unes aux autres.

L'homme de l'art saura aisément déterminer les associations ou combinaisons de modes d'application selon l'invention qui conviennent le mieux à l'usage des composés actifs qu'il envisage.

Outre les différents modes de mise en oeuvre des procédés selon l'invention qui viennent d'être décrits, les dits procédés peuvent également utiliser d'assez nombreuses techniques d'application ; ainsi, comme dites techniques, peuvent notamment être citées, le poudrage, le trempage, la pulvérisation, le fumage ou encore la brumisation.

Lors de l'application des composés actifs de la composition selon l'invention par trempage, notamment des fruits, la solution mise en oeuvre comprend avantageusement de 0,01 à 1% de matières actives, de préférence de 0,1 à 1,0%, encore plus préférentiellement de 0,05 à 0,2%.

D'autres variantes des modes d'application utiles pour les procédés selon l'invention existent, particulièrement selon la ou les parties de la plante ou du végétal qui sont traitées ou à traiter.

Ainsi, les procédés selon l'invention peuvent être mis en oeuvre pour le traitement ou la protection du matériel de propagation végétal ou des semences, notamment les graines, les tubercules ou les rhizomes ; pour le traitement des racines, ou pour le traitement des tiges ou des feuilles de la plante ; de même que pour le traitement des racines, ou encore, des fruits ou autres parties de la plante possédant une substantielle valeur économique ou agronomique.

De plus, les dits procédés selon l'invention peuvent être mis en oeuvre pour le traitement des plantes à de nombreux stades de leur développement, notamment pour le traitement des semences, des semis ou des semis de repiquage ou des plants de repiquage, ou encore des plants, des fruits ou des récoltes.

Un classement des maladies avantageusement traitées grâce à la présente invention peut être donné par culture :
- fruits à pépins (pommes, poires, nashi): *Penicillium expansum, Gloeosporium* sp., *Botrytis cinerea, Monilinia fructigena, Mucor sp., Monilinia laxa, Venturia inaequalis, Venturia pirina, Venturia nashiicola, Podosphaera leucotricha,*
- fruits à noyaux (pêches, prunes, nectarines, cerises, abricots, amandiers): *Botrytis cinerea, Monilinia sp. (M. laxa, fructicola), Monilinia fructigena, A*/*ternaria alternata, Colletotrichum gloeosporioides, Penicillium expansum, Cladosporium herbarum, Rhizopus stolonifer, Rhizopus oryzae, Wilsonomyces carpophilus* (shot-hole),
- raisins (vigne et raisins de table): *Botrytis cinerea, Aspergillus niger, Penicillium digitatum, Penicillium italicum, Rhizopus stolonifer, Alternaria alternata,*
- kiwis: *Botrytis cinerea*,
- agrumes (oranges, citrons, citrons verts, mandarines, pamplemousses): *Botrytis cinerea* et *Phytophthora citrophthora,*
- bananes, plantains: maladie de peau (*Colletotrichum musae*), maladies de la couronne *(Fusarium semitectum, Fusarium moniliforme, Fusarium palédo-roseum, Acremonium sp., Botryodiplodia theo*-*bromae*, *Ceratocystis paradoxa, Colletotrichum musae, Mycosphaerella fijiensis, Mycosphaerella musicola, Nigrospora sphaerica),*
- tomates:, *Alternaria alternata,*
- melons: *Botrytis cinerea, Alternaria solani, Alternaria alternata, Fusarium sp.* (*oxysporum, roseum, solani*)*, Colletotrichum gloeosporioides, Penicillium sp., Phomopsis sp.,*
- ananas: *Ceratocystis paradoxa,*
- cultures légumières et fruitières (fraises, tomates, cucurbitacées, laitue, oignon, poireau, carotte): *Botrytis cinerea, Botrytis spp.* (*squamosa,...*), *Alternaria dauci, Alternaria brassicae*, *Alternaria alternata, Sphaerotheca macularis, Sphaerotheca fuliginea, Peronospora spp., Pseudoperonospora spp.,*
- cultures florales: *Botrytis cinerea, Phytophthora spp.*

Parmi ces maladies, les résultats les plus avantageux sont obtenus sur les cultures suivantes:
- fruits à pépins (pommes, poires, nashi): *Venturia inaequalis, Venturia pirina, Venturia nashiicola, Podosphaera leucotricha,* ou
- bananes, plantains: *Mycosphaerella fijiensis, Mycosphaerella musicola,* ou
- raisins (vigne et raisins de table): *Botrytis cinerea.*

Un aspect supplémentaire de la présente invention concerne un produit pour l'application simultanée, séparée, alternée ou séquencée de pyrimethanil et d'au moins un dérivé de l'acide phosphoreux, de préférence le fosetyl-aluminium.

L'exemple qui suit va permettre une meilleure illustration des différents aspects de le présente invention, notamment des aspects relatifs aux compositions et aux procédés selon l'invention mettant en oeuvre les dites compositions fongicides. Toutefois, cet exemple n'est en rien limitatif de l'étendue de la présente invention.

### Exemple

### Pommier - Venturia inaequalis

Les fongicides suivants sont comparés :
Pyrimethanil à la dose de 20g/hl et les mélanges. fosetyl-Al + pyrimethanil aux doses de 50+20 et 100+20 g/hl appliqués dans un volume de bouillie de 1 200l/ha.

Les produits sont appliqués sur pommier (variété Rome Beauty) sensible à *Venturia inaequalis.*

Les différents produits à l'étude sont pulvérisés tous les 7, 10 ou 13 jours (respectivement 9, 7 et 6 applications au total) dans un programme de traitement commençant le 28 mars 2001.

Des notations de la maladie (% de surface foliaire détruite) sont effectuées les 14 mai et 11 juin 2001. Les résultats sont exprimés en % de feuilles attaquées.

### Résultats

| | 14 MAI | 11 JUIN |
|---|---|---|
| Témoin | 58,5 | 100 |
| Pyrimethanil (20) - 7 jours | 14,7 | 27,7 |
| fosetyl-Al + Pyrimethanil (500 + 200) - 7 jours | 9,7, | 16,2 |
| fosetyl-Al + Pyrimethanil (1000 + 200) - 7 jours | 7,8 | 8,7 |
| Pyrimethanil (200) - 10 jours | 16,2 | 33 |
| fosetyl-Al + Pyrimethanil (500 + 200) - 10 jours | 12,2 | 18,5 |
| fosetyl-Al + Pyrimethanil (1000 + 200) -10 jours | 6,3 | 15,7 |
| Pyrimethanil (200)-13 jours | 16,3 | 32 |
| fosetyl-Al + Pyrimethanil (500 + 200) - 13 jours | 12,3 | 18,7 |
| fosetyl-Al + Pyrimethanil (1000 + 200) - 13 jours | 10,3 | 16,3 |

L'ajout de fosetyl-Al permet d'améliorer la persistance d'action du pyrimethanil. Ainsi l'activité obtenue lors d'applications successives tous les 10 à 13 jours permet d'atteindre l'activité obtenue normalement lors d'applications hebdomadaires et donc de réduire substantiellement le nombre de traitements qu'il a été nécessaire d'appliquer pour contrôler l'évolution de la maladie.

## Revendications

1. Composition fongicide comprenant du pyrimethanil et au moins un dérivé de l'acide phosphoreux, l'acide phosphoreux lui-même ou un de ses sels alcalins ou alcalino-terreux au sein de laquelle le rapport des quantités de pyrimethanil et de dérivé de l'acide phosphoreux va de 0,0005 à 250.

2. Composition selon la revendication 1 comprenant au moins un phosphite métallique.

3. Composition selon l'une ou l'autre des revendications 1 et 2 comprenant du fosetyl-Al ou du fosetyl-Na.

4. Composition selon l'une ou l'autre des revendications 1 à 3 dont le rapport des quantités de pyrimethanil et de dérivé de l'acide phosphoreux va de 0,05 à 10.

5. Composition selon l'une ou l'autre des revendications 1 à 4 dont le rapport des quantités de pyrimethanil et de dérivé de l'acide phosphoreux va de 0,05 à 1.

6. Composition selon l'une ou l'autre des revendications 1 à 5 dont le rapport des quantités de pyrimethanil et de dérivé de l'acide phosphoreux va de 0,1 à 10.

7. Composition selon l'une ou l'autre des revendications 1 à 4 dont le rapport des quantités de pyrimethanil et de dérivé de l'acide phosphoreux va de 0,1 à 6.

8. Composition selon l'une ou l'autre des revendications 1 à 7 dont le rapport des quantités de pyrimethanil et de dérivé de l'acide phosphoreux va de 0,1 à 1.

9. Composition selon l'une ou l'autre des revendications 1 à 8 comprenant du pyrimethanil et du fosetyl-Al en un rapport allant de 0,1 à 1.

10. Composition selon l'une ou l'autre des revendications 1 à 9 comprenant du pyrimethanil et de l'acide phosphoreux en un rapport allant de 0,1 à 1.

11. Composition selon l'une ou l'autre des revendications 1 à 10 comprenant également un support, solide ou liquide, utilisable notamment dans le domaine de l'agriculture, et éventuellement au moins un agent tensioactif et/ou un ou plusieurs agents auxiliaires.

12. Méthode de lutte à titre curatif ou préventif contre les organismes phytopathogènes des plantes au moyen d'au moins une composition selon l'une ou l'autre des revendications 1 à 11.

13. Méthode selon la revendication 12 pour la lutte à titre curatif ou préventif contre les organismes phytopathogènes des plantes choisies parmi
- fruits à pépins (pommes, poires, nashi): *Penicillium expansum, Gloeosporium* sp., *Botrytis cinerea, Monilinia fructigena, Mucor sp., Monilinia laxa, Venturia inaequalis, Venturia pirina, Venturia nashiicola, Podosphaera leucotricha,*
- fruits à noyaux (pêches, prunes, nectarines, cerises, abricots, amandiers): *Botrytis cinerea, Monilinia sp. (M. laxa, fructicola), Monilinia fructigena, Alternaria alternata, Colletotrichum gloeosporioides, Penicillium expansum, Cladosporium herbarum, Rhizopus stolonifer, Rhizopus oryzae, Wilsonomyces carpophilus* (shot-hole),
- raisins (vigne et raisins de table): *Botrytis cinerea, Aspergillus niger, Penicillium digitatum, Penicillium italicum, Rhizopus stolonifer, Alternaria alternata*,
- kiwis: *Botrytis cinerea,*
- agrumes (oranges, citrons, citrons verts, mandarines, pamplemousses): *Botrytis cinerea* et *Phytophthora citrophthora,*
- bananes, plantains: maladie de peau (*Colletotrichum musae*), maladies de la couronne *(Fusarium semitectum, Fusarium moniliforme, Fusarium palédo-roseum, Acremonium sp., Botryodiplodia theo-bromae, Ceratocystis paradoxa, Colletotrichum musae, Mycosphaerella fijiensis, Mycosphaerella musicola, Nigrospora sphaerica),*
- tomates:, *Alternaria alternata,*
- melons: *Botrytis cinerea, Alternaria solani, Alternaria alternata, Fusarium sp. (oxysporum, roseum, solani*), *Colletotrichum gloeosporioides, Penicillium sp., Phomopsis sp.,*
- ananas: *Ceratocystis paradoxa,*
- cultures légumières et fruitières (fraises, tomates, cucurbitacées, laitue, oignon, poireau, carotte): *Botrytis cinerea, Botrytis spp.* (*squamosa,...*)*, Alternaria dauci, Alternaria brassicae, Alternaria alternata, Sphaerotheca macularis, Sphaerotheca fuliginea, Peronospora spp., Pseudoperonospora spp.,*
- cultures florales: *Botrytis cinerea, Phytophthora spp.*

14. Utilisation pour améliorer la persistance d'action du pyrimethanil d'un dérivé du phosphore.

15. Utilisation selon la revendication 14 d'un dérivé de l'acide phosphoreux, de l'acide phosphoreux lui-même ou d'un de ses sels alcalins ou alcalino-terreux.

16. Utilisation selon l'une des revendications 14 et 15 de fosetyl-Al.

17. Utilisation selon l'une des revendications 14 à 16 de fosetyl-Al en un rapport au pyrimethanil allant de 0,1 à 1.

18. Utilisation selon l'une des revendications 14 à 17 pour la lutte contre l'une ou l'autre des maladies suivantes:
- fruits à pépins (pommes, poires, nashi): *Venturia inaequalis, Venturia pirina, Venturia nashiicola, Podosphaera leucotricha,* ou
- bananes, plantains: *Mycosphaerella fijiensis, Mycosphaerella musicola,* ou
- raisins (vigne et raisins de table): *Botrytis cinerea.*

## Claims

1. Fungicidal composition comprising pyrimethanil and at least one phosphorous acid derivative, phosphorous acid itself or one of its alkali or alkaline-earth metal salts in which the ratio of the quantities of pyrimethanil and of phosphorous acid derivative ranges from 0.0005 to 250.

2. Composition according to Claim 1, comprising at least one metal phosphite.

3. Composition according to either of Claims 1 and 2, comprising fosetyl-Al or fosetyl-Na.

4. Composition according to any one of Claims 1 to 3, in which the ratio of the quantities of pyrimethanil and of phosphorous acid derivative ranges from 0.05 to 10.

5. Composition according to any one of Claims 1 to 4, in which the ratio of the quantities of pyrimethanil and of phosphorous acid derivative ranges from 0.05 to 1.

6. Composition according to any one of Claims 1 to 5, in which the ratio of the quantities of pyrimethanil and of phosphorous acid derivative ranges from 0.1 to 10.

7. Composition according to any one of Claims 1 to 4, in which the ratio of the quantities of pyrimethanil and of phosphorous acid derivative ranges from 0.1 to 6.

8. Composition according to any one of Claims 1 to 7, in which the ratio of the quantities of pyrimethanil and of phosphorous acid derivative ranges from 0.1 to 1.

9. Composition according to any one of Claims 1 to 8, comprising pyrimethanil and fosetyl-Al in a quantity ranging from 0.1 to 1.

10. Composition according to either of Claims 1 to 9, comprising pyrimethanil and phosphorous acid in a ratio ranging from 0.1 to 1.

11. Composition according to any one of Claims 1 to 10, also comprising a solid or liquid carrier which can be used in particular in the agricultural field, and optionally at least one surfactant and/or one or more auxiliary agents.

12. Method for the curative or preventive control of phytopathogenic organisms of plants by means of at least one composition according to any one of Claims 1 to 11.

13. Method according to Claim 12, for the curative or preventive control of phytopathogenic organisms of plants chosen from
- Pome fruits (apples, pears, nashi): *Penicillium expansum, Gloeosporium* sp., *Botrytis cinerea, Monilinia fructigena, Mucor sp., Monilinia laxa, Venturia inaequalis, Venturia pirina, Venturia nashiicola, Podosphaera leucotricha,*
- Stone fruits (peaches, plums, nectarines, cherries, apricots, almonds): *Botrytis cinerea, Monilinia* sp. *(M. laxa, fructicola), Monilinia fructigena, Alternaria alternata, Colletotrichum gloeosporioides, Penicillium expansum, Cladosporium herbarum, Rhizopus stolonifer* and *Rhizopus oryzae, Wilsonomyces carpophilus* (shot-hole),
- Grapes (vine and table grapes) : *Botrytis cinerea, Aspergillus niger, Penicillium digitatum, Penicillium italicum, Rhizopus stolonifer, Alternaria alternata,*
- Kiwis: *Botrytis cinerea,*
- Citrus fruits (oranges, lemons, limes, mandarins, grapefruits): *Botrytis cinerea* and *Phytophthora citrophthora,*
- Bananas, plantains: skin disease *(Colletotrichum musae),* diseases of the crown *(Fusarium semitectum, Fusarium moniliforme, Fusarium paledo-roseum, Acremonium* sp., *Botryodiplodia theo-bromae, Ceratocystis paradoxa, Colletotrichum musae, Mycosphaerella fijiensis, Mycosphaerella musicola, Nigrospora sphaerica),*
- Tomatoes: *Alternaria alternata,*
- Melons: *Botrytis cinerea, Alternaria solani, Alternaria alternata, Fusarium* sp. *(oxysporum, roseum, solani), Colletotrichum gloeosporioides, Penicillium* sp., *Phomopsis* sp.,
- Pineapples: *Ceratocystis paradoxa,*
- Vegetable and fruit crops (strawberries, tomatoes, cucurbitaceous plants, lettuce, onion, leek, carrot): *Botrytis cinerea, Botrytis spp. (squamosa,...) , Alternaria dauci, Alternaria brassicae, Alternaria alternata, Sphaerotheca macularis, Sphaerotheca fuliginea, Peronospora spp., Pseudoperonospora spp.,*
- Floral crops: *Botrytis cinerea, Phytophthora spp.*

14. Use of a phosphorus derivative for improving the persistence of the action of pyrimethanil.

15. Use according to Claim 14 of a phosphorous acid derivative, of phosphorous acid itself or of one of its alkali or alkaline-earth metal salts.

16. Use, according to either of Claims 14 and 15, of fosetyl-Al.

17. Use, according to one of Claims 14 to 16, of fosetyl-Al in a ratio to pyrimethanil ranging from 0.1 to 1.

18. Use according to one of Claims 14 to 17, for controlling either of the following diseases:
- Pome fruits (apples, pears, nashi): *Venturia inaequalis, Venturia pirina, Venturia nashiicola, Podosphaera leucotricha,* or
- Bananas, plantains: *Mycosphaerella fijiensis, Mycosphaerella musicola,* or
- Grapes (vine and table grapes): *Botrytis cinerea.*

## Patentansprüche

1. Fungizide Zusammensetzung umfassend Pyrimethanil sowie mindestens ein Derivat der phosphorigen Säure, die phosphorige Säure selbst oder eines ihrer Alkali- oder Erdalkalimetallsalze, wobei das Verhältnis der Mengen an Pyrimethanil und an Derivat der Phosphorsäure von 0,0005 bis 250 reicht.

2. Zusammensetzung nach Anspruch 1, umfassend mindestens ein Metallphosphit.

3. Zusammensetzung nach einem der Ansprüche 1 und 2, umfassend Fosetyl-Al oder Fosetyl-Na.

4. Zusammensetzung nach einem der Ansprüche 1 bis 3, bei der das Verhältnis der Mengen an Pyrimethanil und an Derivat der Phosphorsäure von 0,05 bis 10 reicht.

5. Zusammensetzung nach einem der Ansprüche 1 bis 4, bei der das Verhältnis der Mengen an Pyrimethanil und an Derivat der Phosphorsäure von 0,05 bis 1 reicht.

6. Zusammensetzung nach einem der Ansprüche 1 bis 5, bei der das Verhältnis der Mengen an Pyrimethanil und an Derivat der Phosphorsäure von 0,1 bis 10 reicht.

7. Zusammensetzung nach einem der Ansprüche 1 bis 4, bei der das Verhältnis der Mengen an Pyrimethanil und an Derivat der Phosphorsäure von 0,1 bis 6 reicht.

8. Zusammensetzung nach einem der Ansprüche 1 bis 7, bei der das Verhältnis der Mengen an Pyrimethanil und an Derivat der Phosphorsäure von 0,1 bis 1 reicht.

9. Zusammensetzung nach einem der Ansprüche 1 bis 8, umfassend Pyrimethanil Fosetyl-Al in einem Verhältnis von 0,1 bis 1.

10. Zusammensetzung nach einem der Ansprüche 1 bis 9, umfassend Pyrimethanil und phosphorige Säure in einem Verhältnis von 0,1 bis 1.

11. Zusammensetzung nach einem der Ansprüche 1 bis 10, die weiterhin einen insbesondere auf dem Gebiet der Landwirtschaft verwendbaren festen oder flüssigen Träger sowie gegebenenfalls mindestens ein Tensid und/oder ein oder mehrere Hilfsstoffe umfaßt.

12. Kuratives oder präventives Bekämpfungsverfahren für phytopathogene Organismen von Pflanzen mittels mindestens einer Zusammensetzung nach einem der Ansprüche 1 bis 11.

13. Verfahren nach Anspruch 12 für die kurative oder präventive Bekämpfung von phytopathogenen Organismen von Pflanzen ausgewählt aus der Gruppe
- Kernfrüchte (Äpfel, Birnen, Nashi-Früchte): *Penicillium expansum, Gloeosporium sp., Botrytis cinerea, Monilinia fructigena, Mucor sp., Monilinia laxa, Venturia inaequalis, Venturia pirina, Venturia nashilcola, Podosphaera leucotricha,*
- Steinfrüchte (Pfirsiche, Pflaumen, Nektarinen, Kirschen, Aprikosen, Mandelbäume): *Botrytis cinerea, Monilinia sp. (M. lexa, fructicola), Monilinia fructigena, Alternaria alternata, Colletotrichum gloeosporioides, Penicillium expensum, Cladosporium herbarum, Rhizopus stolonifer, Rhizopus oryzae, Witsonomyces carpophilus* (Schrotschuß),
- Trauben (Weintrauben und Tafeltrauben) : *Botrytis cinerea, Aspergillus niger, Penicillium digitatum, Penicillium italicum, Rhizopus stolonifer, Alternaria alternata,*
- Kiwifrüchte: *Botrytis cinerea,*
- Zitrusfrüchte (Orangen, Zitronen, Limetten, Mandarinen, Grapefruit): *Botrytis cinerea und Phytophthora citrophthora,*
- Obstbananen, Mehlbananen: Bananenfruchtfäule *(Colletotrichum musae),* Krankheiten der Krone *(Fusarium semitectum, Fusarium moniliforme, Fusarium paledo-roseum, Acremonium sp., Botryodiplodia theobromae, Ceratocystis paradoxa, Colletotrichum musae, Mycosphaerella fijiensis, Mycosphaerella musicola, Nigrospora sphaerica),*
- Tomaten: *Alternaria alternata,*
- Melonen: *Botrytis cinerea, Alternaria solani, Alternaria alternata, Fusarium sp. (oxysporum, roseum, solani), Colletotrichum gloeosporioides, Penicillium sp., Phomopsis sp.,*
- Ananas: *Ceratocystis paradoxa,*
- Gemüse- und Obstkulturen (Erdbeeren, Tomaten, Kürbisgewächse, Salat, Zwiebel, Lauch, Karotte): *Botrytis cinerea, Botrytis spp. (squamosa etc.), Alternaria dauci, Alternaria brassicae, Alternaria alternata, Sphaerotheca macularis, Sphaerotheca fuliginea, Peronospora spp., Pseudoperonospora spp.,*
- Blumenkulturen: *Botrytis cinerea, Phytophthora spp*.

14. Verwendung zur Verbesserung der Wirkungsdauer von Pyrimethanil eines Phosphorderivats.

15. Verwendung nach Anspruch 14 eines Derivats der phosphorigen Säure, der phosphorigen Säure selbst oder eines ihrer Alkali- oder Erdalkalisalze.

16. Verwendung nach einem der Ansprüche 14 und 15 von Fosetyl-Al.

17. Verwendung nach einem der Ansprüche 14 bis 16 von Fosetyl-Al in einem Verhältnis von 0,1 bis 1 zu Pyrimethanil.

18. Verwendung nach einem der Ansprüche 14 bis 17 zur Bekämpfung von einer beliebigen Krankheit aus der folgenden Gruppe:
- Kernfrüchte (Äpfel, Birnen, Nashi-Früchte): *Venturia inaequalis, Venturia pirina, Venturia nashiicola, Podosphaera leucotricha,* oder
- Obstbananen, Mehlbananen: *Mycosphaerella fijiensis, Mycosphaerella musicola, oder*
- Trauben (Weintrauben und Tafeltrauben) : *Botrytis cinerea.*
